# EUROPEAN PATENT APPLICATION

(11) **EP 4 389 826 A1**
(43) Date of publication of application: **26.06.2024**
(21) Application number: 22216038.4
(22) Date of filing: 22.12.2022
(51) Int. Cl.: C08L 97/00

(54) **RECOVERED LIGNIN AND DERIVATIZED RECOVERED LIGNIN HAVING REDUCED SILICON-CONTENT AND METHODS FOR REDUCING THE SILICON-CONTENT IN RECOVERED LIGNIN AND DERIVATIZED RECOVERED LIGNIN**

(71) Applicant: Ren Fuel K2B AB, 102 48 Stockholm (SE)
(72) Inventor: LISEEV, Timofey, 102 48 Stockholm (SE); DAHLSTRAND, Christian, 102 48 Stockholm (SE); ÖST, Amalia, 102 48 Stockholm (SE); SANDSTRÖM, Tove, 102 48 Stockholm (SE); NORÉN, Alexander, 102 48 Stockholm (SE)
(74) Representative: Brann AB

(57) **Abstract**

Recovered lignin having reduced silicon-content and a method for reducing the silicon-content in recovered lignin comprises contacting recovered lignin with a source of fluoride for a predetermined period of time under conditions effective for the fluoride to react with silicon contained in the recovered lignin are disclosed. Also disclosed are derivatized recovered lignin exhibiting saturated and/or unsaturated hydrocarbon residues from fatty acids attached to the lignin having reduced silicon-content, and a corresponding method comprises contacting the derivatized recovered lignin with a source of fluoride.

## Description

### FIELD OF THE INVENTION

The present invention relates to recovered lignin having a reduced silicon-content, and a method for reducing the silicon-content in recovered lignin. The method comprises contacting the recovered lignin with a source of fluoride. The invention further relates to a derivatized recovered lignin exhibiting saturated and/or unsaturated hydrocarbon residues from fatty acids having a reduced silicon-content, as well as a method for reducing the silicon-content in the derivatized recovered lignin comprising contacting the derivatized recovered lignin with a source of fluoride.

### BACKGROUND ART

Lignin is a biopolymer, typically comprising coumaryl alcohol, coniferyl alcohol, and sinapyl alcohol monomers, which is present in lignocellulosic biomass, such as for example wood. For a long time, lignin has been considered an undesirable by-product, which is primarily obtained e.g. in pulping processes in pulp mills in the manufacturing of paper and cardboard, typically from wood. In recent years, however, there is a growing interest in utilizing also the lignin, e.g. as a renewable energy source, which can be used e.g. for liquid biofuel production.

The lignin, which has been removed from the lignocellulosic biomass, contains silicon, typically in the form of silica and/or silicates, which is/are present in the lignocellulosic biomass from which the lignin has been removed. Also, when lignin is being precipitated from a liquid medium using a certain pH of the liquid medium, silicates tend to co-precipitate with the lignin. Precipitated lignin therefore comprises substantial amounts of silicates.

Different sources of lignocellulosic biomass may contain different amounts of silicon. For example, rice straw is known to contain high amounts of silica.

In the art, attempts have been made to reduce the silica content in recovered lignin.

Nghi H. Do et al., in "The novel method to reduce the silica content in lignin recovered from black liquor originating from rice straw", Nature, Scientific Reports, (2020) 10:21263, describe a method of reducing the silica content in lignin recovered from black liquor. The method is based on two-step acidification of the black liquor using sulphuric acid, first at pH of 9 and then at pH 3. The percentage of silica removal is stated to be as high as 94.38%.

Attempts have been made to reduce the silica content in black liquor.

Tao Wang et al., in "A low capital method for silicon interference in bamboo kraft pulping alkaline recovery system", Journal of Cleaner Production, 315 (2021) 128283 describe a method of reducing the silicon content in bamboo pulp black liquor. It noted therein that the content of silica in bamboo is low for a non-wood material, but is much higher than that in wood material. The authors propose a combination of acidification and light oxidation to remove silicon while retaining lignin in the black liquor at the same time. The silicon removal rate reaches 76.41 wt%.

S A Mandavgane et al., in "Desilication of agro based black liquor using bubble column reactor", Journal of Scientific and Industrial Research, Vol. 65, July 2006, pp. 603-607, describe precipitation of silica using carbonation. Carbonation involves accurate control of pH, as lignin also co-precipitates around the same pH of desilication. At pH 10.0-10.5, removal (70%) of dissolved silica with minimum loss of lignin was observed.

M.I. Aujla et al., in "Mechanism of Silica Precipitation by lowering pH in Chemithermo-mechanical Pulping Black Liquors:", 1st WSEAS Int, Conf. on Computational Chemistry, Cairo, Egypt, December29-31, 2007, investigates mechanisms of silica precipitation in chemithermomechanical pulping black liquors. According to the authors, it is evident that the pH values at which silica precipitates (9.8) almost quantitatively, is close to the pH value at which lignin starts precipitating, however, maximum desilication can be achieved at pH 9.8.

For certain purposes, even a relatively low content of silicon in the recovered lignin, such as obtained using known methods, may be problematic or disadvantageous.

It would be desirable to provide recovered lignin having a further reduced content of silicon. Accordingly, it is an object of the present invention to provide lignin having an extremely low content of silicon. It is also an object of the present invention to provide an improved method of reducing the silicon-content in recovered lignin, enabling achievement of extremely low levels of silicon in recovered lignin.

### SUMMARY OF THE INVENTION

According to the present invention, the above object has been achieved by the provision of recovered lignin from lignocellulosic biomass having a silicon content by weight, calculated as Si, of not more than 150 ppm by weight of the dry lignin weight of the recovered lignin. Accordingly, the invention, in one aspect relates to such recovered lignin having a silicon content by weight, calculated as Si, of not more than 150 ppm by weight of the dry lignin weight of the recovered lignin.

According to the present invention, the above second object has been achieved by means of a method wherein recovered lignin is contacted with a source of fluoride for a predetermined period of time.

Accordingly, in another aspect the invention relates to a method of providing a recovered lignin having a reduced content of silicon, comprising the steps of: **A** providing a recovered lignin obtained from lignocellulosic biomass; **B** contacting the recovered lignin with a source of fluoride for a predetermined period of time under conditions effective for the fluoride to react with silicon contained in the recovered lignin, thereby forming fluorosilicates; **C** removing the fluorosilicates formed in step **B,** thereby obtaining a recovered lignin having a reduced silicon content.

In a further aspect the invention relates to derivatized recovered lignin exhibiting saturated and/or unsaturated hydrocarbon residues attached to lignin, having a silicon content by weight, calculated as Si, of not more than 150 ppm by weight of the dry lignin content of the derivatized recovered lignin. For example, for a derivatized recovered lignin consisting of 37 % by weight of recovered lignin residues, and 63% of fatty acid residues, the corresponding upper limit of silicon by weight, based on the overall weight of the derivatized recovered lignin, will be 55.5 ppm (0.37 x 150).

In yet a further aspect the invention relates to a method of providing a derivatised recovered lignin exhibiting saturated and/or unsaturated hydrocarbon residues having a reduced content of silicon, comprising the steps of: **A'** providing a derivatized recovered lignin obtained from lignocellulosic biomass exhibiting saturated and/or unsaturated hydrocarbon residues; **B'** contacting the derivatized recovered lignin with a source of fluoride for a predetermined period of time under conditions effective for the fluoride to react with silicon contained in the derivatized recovered lignin, thereby forming fluorosilicates; and, **C'** removing the fluorosilicates formed in step **B',** thereby obtaining a derivatized recovered lignin exhibiting saturated and/or unsaturated hydrocarbon residues having a reduced silicon content.

The inventive method allows for obtaining recovered lignin having a silicon content of about 20 ppm.

In a preferred embodiment, the inventive method is also useful for reducing the content of various metal ions contained in recovered lignin.

In preferred embodiments of the inventive methods, the source of fluoride used does not contain any metal ions.

By means of the inventive method, lignin suitable for use as a feedstock to a transportation fuel refinery can readily be obtained.

The term "recovered lignin" as used herein is intended to refer to lignin which has been removed from lignocellulosic biomass. The lignin may have been removed from the biomass using different methods, such as by hydrolysis, organosolv, or kraft process. The recovered lignin is typically referred to by the associated method, e.g. hydrolysis lignin, organosolv lignin, and kraft lignin, respectively. Organosolv lignin may be further specified by referring to the organic solvent used in the organosolv process, such e.g. methanol, ethanol, butanol, acetone, acetic acid, formic acid, and dioxane. The recovered lignin can be provided in suspended or precipitated form. The precipitated solid form may exhibit a residual content of liquid media from the precipitation. Preferably, the recovered lignin is selected from the group consisting of kraft lignin, hydrolysis lignin, organosolv lignin, and acetosolv lignin.

It is believed that the inventive method could also be used for reducing the silicon-content from other less well-defined types of lignin not embraced by the term "recovered lignin" as defined above, such as for example lignin species obtained from pyrolysis of biomass, or other thermochemical treatments of biomass.

The term "silicon-content" as used herein is intended to embrace inorganic silicon-containing compounds which may be present in recovered lignin. The silicon-content is given in weight of elemental Si.

The term "derivatized lignin" as used herein is intended to refer to recovered lignin which has been derivatized with saturated and/or unsaturated fatty acids so as to exhibit hydrocarbon residues from said fatty acids which are attached to the lignin. Such hydrocarbon residue can for example be attached to the lignin via a linker group, such as an ester, ether, amide, or carbamide linker group.

Further embodiments and advantages of the invention will be apparent from the following detailed description and appended claims.

### DETAILED DESCRIPTION OF THE INVENTION

The present invention is based on using a source of fluoride for removing silicon contained in recovered lignin. According to the invention, the source of fluoride could be any chemical compound having a fluorine atom available for reaction with silicon. Examples of sources of fluoride according to the invention are the following: ammonium fluoride wherein the ammonium ion may be substituted or non-substituted, hydrogen fluoride, sodium fluoride, and potassium fluoride.

However, hydrogen fluoride, HF, is an extremely hazardous chemical compound, the use and handling of which for this reason is preferably avoided according to the present invention.

Preferred sources of fluoride are therefore substituted and non-substituted ammonium fluoride, sodium fluoride, and potassium fluoride.

The present inventors have also found certain embodiments of the method to be effective also for reducing the contents of various metals in the recovered lignin, such as sodium, potassium, calcium, magnesium, iron, aluminium, vanadium, and chromium. In such embodiments a rinsing liquid is used in step **C, C'** to remove the fluorosilicates having a pH value of no more than 2, preferably an aqueous rinsing liquid.

In preferred embodiments, in order to avoid supplying metal ions to the recovered lignin during the inventive method, or in order to enhance metal ion removal, the source of fluoride used should not contain a metal ion. For this purpose substituted and non-substituted ammonium fluoride are preferred, such as e.g. tetrabutylammonium fluoride, and ammonium fluoride. The ammonium ion may e.g. be substituted (e.g. with tetrabutyl) to provide a more non-polar characteristic, making it capable of being transferred between a polar liquid phase and a non-polar liquid phase, such as when the recovered lignin or derivatized lignin is in a less polar liquid phase.

The inventive method is particularly effective when an aqueous liquid medium is used in the contacting step (**B, B'**), and an aqueous liquid medium is used as a rinsing medium in the removal step (**C, C'**).

Removal of silicon using fluoride ions from recovered lignin precipitated from black liquor has been found to be very efficient and provides high yields of recovered lignin having reduced silicon content.

According to the present invention, silicon can also be removed from derivatized recovered lignin, i.e. wherein the recovered lignin has been derivatized so as to exhibit hydrocarbon residues from saturated and/or unsaturated fatty acids. In the derivatized recovered lignin the total amount of fatty acid hydrocarbon residues is preferably at least 10 % by weight, more preferably at least 30 % by weight, and even more preferably at least 50 % by weight of the dry weight of the derivatized recovered lignin. An amount of 60 % by weight of fatty acid derived hydrocarbon residues of the weight of the derivatized lignin corresponds to about 100 % of esterification of the lignin. The ratio of lignin to fatty acid hydrocarbon residues is preferably within the range of 65:35 to 35:65 by weight.

Merely a relatively low amount of the source of fluoride is required according to the invention. In steps **B,** and **B',** the source of fluoride is used in an amount corresponding to at least 6 molar equivalents of fluoride to 1 molar equivalent of silicon.

The recovered lignin typically exhibits weight average molecular weight (Mw) of at least 2,000 g/mol, preferably at least 3,000 g/mol, more preferably at least 4,000 g/mol, and preferably not higher than 10,000 g/mol.

When in solid form, such as precipitated, the recovered lignin typically has a dry lignin content of at least 50 % by weight, preferably at least 60 % by weight, and more preferably at least 70 % by weight of the overall weight of the recovered lignin.

Different types of recovered lignin may exhibit different amounts of silicon and metals. For example, hydrolysis lignin, which has not been dissolved and precipitated, typically exhibits a higher silicon content and residual cellulose. For this purpose, a pretreatment step is preferably included in the method when hydrolysis lignin is provided as the recovered lignin, to remove the residual cellulose.

### Step A

In preferred embodiments of the method, the recovered lignin is solid lignin, especially precipitated lignin.

In preferred embodiments of the method, the recovered lignin is kraft lignin, especially in precipitated form.

### Step B - contacting step

In preferred embodiments of the method a liquid medium is used in step **B,** preferably wherein the source of fluoride is soluble, more preferably an aqueous liquid medium. The dry lignin content of the liquid medium is at least 5 % by weight, preferably at least 10 % by weight, more preferably at least 20 % by weight, more preferably at least 30 % by weight, and preferably not more than 70 % by weight, preferably not more than 60 % by weight of the overall weight the liquid medium containing the recovered lignin and the source of fluoride.

The source of fluoride could be gaseous, such as HF, which could e.g. be sparged into a liquid medium containing the recovered lignin. In case of using gaseous HF as the source of fluoride in the absence of water in the liquid medium, the silicon can be removed as gaseous SiF₄ from the liquid medium. This option is however generally not preferred, due to the added hazard associated with the handling of HF.

The pH of the liquid medium is 7.5 or lower. Since the kinetics of the contacting step are believed to be primarily governed by the pH value, the pH should generally be kept as low as possible, such as preferably 6 or lower, more preferably 5 or lower, more preferably 4 or lower, more preferably 3 or lower, more preferably 2 or lower, especially preferred 1.5 or lower, preferably 1 or lower. On the other hand, a too low pH can have a detrimental effect on the lignin, and, for this reason should preferably not be lower than about 0.5.

The contacting step is carried out at a temperature within the range of 0-100°C, preferably of 80°C or lower, preferably 70°C or lower, more preferably 60°C or lower, and preferably 20°C or higher, more preferably 40°C or higher, more preferably 50°C or higher. At temperatures of 50°C and higher, gaseous HF tend to form to a larger extent, and care should be taken so as to prevent undesired escape of HF.

In step **B,** the predetermined period of time is 30 minutes or longer, preferably 45 minutes or longer, and preferably 120 minutes or shorter, more preferably 90 minutes or shorter. The duration will generally be dependent on the temperature and pH used.

### Step C - removal step

Preferably, a rinsing liquid is used to remove the fluorosilicates, more preferably an aqueous rinsing liquid.

The rinsing liquid suitably has a pH of 6 or lower, preferably 5 or lower, more preferably 4 or lower. For an effective removal of metal ions contained in the recovered lignin, the pH of the rinsing liquid should preferably not be above 2, and more preferably not above 1.5. When a higher pH is used, undesired precipitation of compounds formed from Ca²⁺, Mg²⁺, and Al³⁺ is more likely to occur. A preferred range of pH of the rinsing liquid is 0-1.5, such as about 0.5. Like in step **B** above, also in this step **C,** a too low pH will have a detrimental effect on the lignin, and, for this reason should preferably not be lower than about 0.5.

In preferred embodiments, the rinsing liquid comprises acetic acid, sulfuric acid, or a combination thereof.

In embodiments wherein a rinsing liquid is used in step **C,** rinsing can be carried out batchwise, e.g. by suspending the recovered lignin from step **B** in the rinsing liquid under agitation or mixing, e.g. for 20 minutes, and thereafter separating the recovered lignin from the rinsing liquid, e.g. by filtration or centrifugation, or in continuous mode, e.g. by passing a flow of rinsing liquid through a portion of lignin obtained from step **B,** e.g. by passing a flow of the rinsing liquid through a lignin filter cake on a filter.

The rinsing procedure can be repeated if desired.

The resulting recovered lignin will have a Si content of maximum 150 ppm by weight of the dry lignin content of the recovered lignin.

When an aqueous liquid medium is used in both steps **B** and **C,** the pH of both liquid aqueous liquid media is preferably substantially the same. In a preferred embodiment, same aqueous liquid medium is used in step **B** as in step **C,** except for the added content of the source of fluoride in the medium used in step **B.** Accordingly, after removal of fluorosilicate compounds obtained in the aqueous liquid medium in step **C,** the liquid can be recirculated for use in step **B,** wherein a source of fluoride is added to the aqueous liquid medium. In a preferred embodiment, fluoride is recovered from the aqueous liquid medium in Step **C** for use in Step **B.**

### STEP A'

The derivatized recovered lignin exhibits saturated and/or unsaturated hydrocarbon residues from fatty acids attached to the lignin, and is preferably in the form of an oily liquid composition. The dry lignin content of the derivatized recovered lignin is preferably within a range of 35-65 %, the remainder being hydrocarbon residues from fatty acids. The saturated and/or unsaturated hydrocarbon residues from fatty acids are preferably attached to the lignin via ester or ether linker groups, more preferably ester linker groups.

### STEP B' contacting step

In preferred embodiments of the method a liquid medium is used in step **B',** preferably wherein the source of fluoride is soluble, more preferably an aqueous liquid medium. Before contacting the derivatized recovered lignin with the source of fluoride, the derivatized recovered lignin can optionally be diluted with a suitable solvent, such as light gas oil, e.g. to 20-80 % by weight of the derivatized recovered lignin. The source of fluoride is preferably ammonium fluoride, especially substituted ammonium (e.g. with tetrabutyl) to provide a more non-polar characteristic, making it capable of being transferred between a polar liquid phase, in which the source of fluoride is provided, and a non-polar liquid phase, containing the derivatized lignin.

The source of fluoride could be gaseous, such as HF, which could e.g. be sparged into derivatized recovered lignin. In case of using gaseous HF as the source of fluoride in the absence of water in the liquid medium, the silicon can be removed as gaseous SiF₄ from the liquid medium. This option is however generally not preferred, due to the added hazard associated with the handling of HF.

The pH of the liquid medium is 7.5 or lower. Since the kinetics of the contacting step are believed to be primarily governed by the pH value, the pH should generally be kept as low as possible, such as preferably 6 or lower, more preferably 5 or lower, more preferably 4 or lower, more preferably 3 or lower, more preferably 2 or lower, especially preferred 1.5 or lower, preferably 1 or lower. On the other hand, a too low pH will have a detrimental effect on the lignin, and, for this reason should preferably not be lower than about 0.5.

The contacting step is carried out at a temperature within the range of 0-100°C, preferably of 80°C or lower, preferably 70°C or lower, more preferably 60°C or lower, and preferably 20°C or higher, more preferably 40°C or higher, more preferably 50°C or higher. At temperatures of 50°C and higher, gaseous HF tend to form to a larger extent, and care must be taken so as to prevent undesired escape of HF.

In step **B',** the predetermined period of time is 30 minutes or longer, preferably 45 minutes or longer, and preferably 120 minutes or shorter, more preferably 90 minutes or shorter. The duration will generally be dependent on the temperature and pH used.

When two different liquid phases are being used, the liquid phases are continuously mixed, such as by stirring, during the contacting step. The liquid phase containing the source of fluoride is separated from the lignin containing phase after the contacting step, and before the removal step.

### STEP C' removal step

Preferably, a rinsing liquid is used to remove the fluorosilicates, more preferably an aqueous rinsing liquid, such as water, wherein the fluorosilicates are soluble.

In embodiments wherein a rinsing liquid is used in step **C',** rinsing can be carried out batchwise, e.g. by mixing the rinsing liquid with the derivatized recovered lignin containing phase, e.g. for 20 minutes, and thereafter letting the phases settle. The derivatized recovered lignin containing phase depleted in silicon is separated from the aqueous phase containing the fluorosilicates.

The rinsing procedure can be repeated if desired.

The resulting recovered lignin will have a Si content of maximum 150 ppm by weight of the dry lignin content of the recovered lignin.

Preferably the recovered lignin has a total combined content of sodium and potassium by weight of not more than 150 ppm, preferably not more than 100 ppm, preferably not more than 80 ppm, more preferably not more than 10 ppm of the dry lignin weight of the recovered lignin.

In preferred embodiments, the recovered lignin has a total combined content of calcium and magnesium by weight of not more than 150 ppm, preferably not more than 100 ppm, preferably not more than 80 ppm, more preferably not more than 30 ppm the dry lignin weight of the recovered lignin.

The recovered lignin preferably has a total combined content of iron, aluminium, and vanadium, of not more than 150 ppm, preferably not more than 100 ppm, preferably not more than 80 ppm, more preferably not more than 30 ppm of the dry lignin weight of the recovered lignin.

Preferably the recovered lignin has a total amount of fluorine below 10 ppm by weight of the dry lignin content.

The above amounts given for the recovered lignin of the invention also applies to the derivatized recovered lignin of the invention.

The invention will be described in more detail hereinafter by way of the following examples.

### EXAMPLES

### Example 1

In this example, the recovered lignin used was precipitated kraft lignin with 40 wt% residual moisture (see Table 1 for initial major metal and semi-metal contents). This recovered lignin had been obtained by precipitation from black liquor in two steps: first with CO₂; then with H₂SO₄. The material was ground into a powder. In a plastic container containing a stirring bar, 25 g of the lignin (60 wt% dry substance content) was mixed with 80 mL of pH 1 solution of water, 24 wt% acetic acid and sulfuric acid. To the mixture, 30 mg ammonium fluoride was added, and the container lid was immediately closed. Under continuous stirring, the mixture was heated to 50°C over the course of 15 min, incubated for 1 hour, and then cooled down to 25°C over the course of 15 min. The mixture was then filtered to yield a lignin filter cake with 55 wt% dry substance content. The lignin was transferred back to the plastic container, and 80 mL of pH 1 rinsing liquid was added (comprising water, 24 wt% acetic acid, sulfuric acid). The mixture was stirred at 25°C for 30 min and filtered to yield a lignin filter cake with 55 wt% dry substance content. The lignin cake was again resuspended in 80 mL of the rinsing liquid and the mixture was stirred at 25°C for 30 min. The suspension was then filtered to yield a lignin filter cake with 55 wt% dry substance content. The resulting lignin was removed from the filter and dried first in open air (in a fume hood) for 24 hours, and then further in a 60°C oven for 24 more hours. The final yield was 90% dry lignin. As a control experiment, the procedure was reproduced without adding ammonium fluoride. The resulting washed lignins were digested and analysed by ICP for major trace element contents (Table 1). Notably, silicon content is barely affected by the contacting in the absence of fluoride, while the addition of fluoride allowed to reduce the silicon content 10-fold. Also notable is the fact that aluminium extraction is improved by the addition of fluoride compared to the fluoride-free contacting liquid, likely due to the dissolution of aluminosilicates.

**Table 1. Major trace element contents in dry precipitated kraft lignin before the procedure and after the procedure with and without the fluoride.**

| | Trace element contents, ppm by weight | | | | | | | | |
|---|---|---|---|---|---|---|---|---|---|
| | Al | Ca | Fe | Mg | P | K | Si | Na | V |
| Dry initial recovered lignin | 26 | 28 | 24 | 20 | 2 | 10 | 236 | 35 | 6 |
| Dry lignin not contacted with fluoride | 11 | 4 | 7 | 15 | 2 | 2 | 195 | 2 | 2 |
| Dry lignin contacted with fluoride | 3 | 3 | 9 | 10 | 1 | 1 | 24 | 4 | 3 |

### Example 2

In this example, same recovered lignin as in Example 1 was used and washed by the same procedure as in Example 1, but the rinsing was performed directly on the filter. In a plastic container containing a stirring bar, 25 g of the ground lignin (60 wt% dry substance content) was mixed with 80 mL of pH 1 solution of water, 24 wt% acetic acid and sulfuric acid. To the mixture, 30 mg ammonium fluoride was added, and the container lid was immediately closed. Under continuous stirring, the mixture was heated to 50°C over the course of 15 min, incubated for 1 hour, and then cooled down to 25°C over the course of 15 min. On a vacuum filtration setup, the mixture was carefully filtered until a still-wet filter cake (<45 wt% dry mass) was obtained. A sheet of filter paper was placed on top of the filter cake to prevent its erosion by the pouring rinsing liquid. Then 80 mL of pH 1 rinsing liquid (comprising water, 24 wt.% acetic acid, sulfuric acid) was poured onto the filter and passed through the lignin over the course of 5 min, again avoiding drying-up of the cake. This rinse procedure was repeated once more, this time ending in complete vacuum filtration to obtain a 55 wt% dry substance lignin cake. The resulting lignin was removed from the filter and dried first in open air (in a fume hood) for 24 hours, and then further in a 60°C oven for 24 more hours. The lignin was then digested and analysed by ICP for major trace element contents. As can be seen in Table 2, silicon removal as well as removal of other trace elements was not compromised by performing rinsing directly on the filter instead of in slurry.

**Table 2. Major trace element contents in dry precipitated kraft lignin after fluoride contacting and rinsing on the filter in comparison to rinsing in the slurry.**

| | Trace element contents, ppm by weight | | | | | | | | |
|---|---|---|---|---|---|---|---|---|---|
| rinse | Al | Ca | Fe | Mg | P | K | Si | Na | V |
| in slurry | 4 | 6 | 11 | 16 | 1 | 1 | 36 | 5 | 4 |
| on filter | 4 | 2 | 14 | 15 | 1 | 2 | 31 | 2 | 3 |

### Example 3

In this example, same recovered lignin was used as in Example 1, but it was dried to 2 wt% residual moisture before washing and rinsing analogous to the procedure in Example 1. In a plastic container containing a stirring bar, 25 g of the ground lignin (98 wt% dry substance content) was mixed with 100 mL of pH 1 solution of water, 20 wt% acetic acid and sulfuric acid. To the mixture, 50 mg ammonium fluoride was added, and the container lid was immediately closed. Under continuous stirring, the mixture was heated to 50°C over the course of 15 min, incubated for 1 hour, and then cooled down to 25°C over the course of 15 min. The mixture was then filtered to yield a lignin filter cake with 55 wt% dry substance content. The lignin was transferred back to the plastic container, and 80 mL of pH 1 rinsing liquid was added (comprising water, 24 wt% acetic acid, sulfuric acid). The mixture was stirred at 25°C for 30 min and filtered to yield a lignin filter cake with 55 wt% dry substance content. The lignin cake was again resuspended in 80 mL of the rinsing liquid and the mixture was stirred at 25°C for 30 min. The suspension was then filtered to yield a lignin filter cake with 55 wt% dry substance content. The resulting lignin was removed from the filter, dried, and analysed analogously to Example 1. Table 3 shows trace element contents in the final lignin in comparison to the washed lignin.

**Table 3. Major trace element contents in dry precipitated kraft lignin after inventive treatment of pre-dried (DS 98%) recovered lignin, and of wet (DS 65%) recovered lignin, respectively.**

| | Trace element contents in washed lignin, ppm | | | | | | | | |
|---|---|---|---|---|---|---|---|---|---|
| Starting recovered lignin dry substance | Al | Ca | Fe | Mg | P | K | Si | Na | V |
| 65% | 4 | 6 | 11 | 16 | 1 | 1 | 36 | 5 | 4 |
| 98% | 6 | 6 | 20 | 15 | 2 | 2 | 36 | 4 | 5 |

### Example 4

In this example, the same procedure as in Example 1 was repeated several times with the recovered lignin, but each time a different fluoride salt (natrium fluoride, potassium fluoride, and tetrabutylammonium fluoride, respectively) was used. The weight of each added fluoride salt was adjusted to match the molar amount of fluoride used in Example 1 (0.81 mmol fluoride per 15 g dry recovered lignin). The amount used was chosen based on the measured silica/silicate content in the lignin so as to provide 6 molar equivalents of fluoride to molar equivalent of Si. The resulting rinsed lignins were dried, digested, and analysed by ICP for major trace element contents (Table 4). The results show that all the tested fluoride sources performed equally well in terms of silicon removal from lignin.

**Table 4. Major trace element contents in initial dry precipitated kraft lignin and in the recovered lignin treated with various fluorides.**

| | Fluoride used in contacting step | Trace element contents, ppm by weight | | | | | | | | |
|---|---|---|---|---|---|---|---|---|---|---|
| | | Al | Ca | Fe | Mg | P | K | Si | Na | V |
| Initial recovered lignin | - | 26 | 28 | 24 | 20 | 2 | 10 | 236 | 35 | 6 |
| Rinsed lignin | NH4F | 3 | 6 | 11 | 16 | 1 | 1 | 30 | 4 | 4 |
| | NaF | 2 | 4 | 10 | 15 | 1 | 1 | 30 | 4 | 4 |
| | KF | 3 | 4 | 10 | 15 | 2 | 4 | 30 | 6 | 4 |
| | TBAF | 4 | 6 | 14 | 15 | 1 | 1 | 33 | 4 | 5 |

### Example 5

In this example, the recovered lignin used as starting material was a kraft lignin. Unlike the precipitated kraft lignin as used in the previous Examples, this lignin had been prepared by precipitation from black liquor using CO₂ only. This difference in the recovery method is responsible for the very high metal content in the initial recovered lignin (Table 5). This, in turn, required larger wash and rinse liquid volumes. A plastic container with a stirring bar was charged with 60 g of the ground recovered lignin (71 wt% dry substance content), to which 400 mL of pH 0.5 solution of water, 24 wt% acetic acid and sulfuric acid was added. To the mixture, 200 mg ammonium fluoride was added, and the container lid was immediately closed. Under continuous stirring, the mixture was heated to 50°C over the course of 15 min, incubated for 1 hour, and then cooled down to 25°C over the course of 15 min. The mixture was then filtered to yield a lignin filter cake with 55 wt% dry substance content. The lignin was transferred back to the plastic container, and 400 mL of pH 0.5 rinsing liquid was added (comprising water, 24 wt% acetic acid, sulfuric acid). The mixture was stirred at 25°C for 30 min and filtered to yield a lignin filter cake with 55% dry substance content. The lignin cake was again resuspended in 400 mL of the rinsing liquid and the mixture was stirred at 25°C for 30 min. The suspension was then filtered to yield a lignin filter cake with 55 wt% dry substance content. The lignin cake was again resuspended in 400 mL of the rinsing liquid and the mixture was stirred at 25°C for 30 min. In total, the lignin was contacted once with fluoride and rinsed three times. The resulting lignin was removed from the filter, dried, and analysed analogously to Example 1. The major trace element contents before and after the washings are presented in Table 5. The silicon content was successfully reduced more than 10-fold.

**Table 5. Major trace element contents in initial dry kraft recovered lignin and in the same lignin after rinsing.**

| | Trace element contents, ppm | | | | | | | | |
|---|---|---|---|---|---|---|---|---|---|
| | Al | Ca | Fe | Mg | P | K | Si | Na | V |
| Initial recovered lignin | 44 | 146 | 27 | 345 | 46 | 10525 | 376 | 98365 | 5 |
| Rinsed lignin | 10 | 7 | 12 | 2 | 2 | 30 | 32 | 46 | 1 |

### Example 6

In another example, the recovered lignins used were organosolv lignins recovered from wheat straw from two different suppliers and having very different initial trace elements content. The recovered lignins were dry and powdered. In each case, a plastic container containing a stirring bar, 16 g of the recovered lignin (95 wt% dry substance content) was mixed with 90 mL of pH 0.5 solution of water, 24 wt% acetic acid and sulfuric acid. To the mixture, 100 mg ammonium fluoride was added, and the container lid was immediately closed. Under continuous stirring, the mixture was heated to 50°C over the course of 15 min, incubated for 1 hour, and then cooled down to 25°C over the course of 15 min. The mixture was then filtered to yield a lignin filter cake with 55 wt% dry substance content. The lignin was transferred back to the plastic container, and 80 mL of pH 0.5 rinsing liquid was added (comprising water, 24 wt% acetic acid, sulfuric acid). The mixture was stirred at 25°C for 30 min and filtered to yield a lignin filter cake with 55 wt% dry substance content. The lignin cake was again resuspended in 80 mL of the rinsing liquid and the mixture was stirred at 25°C for 30 min. The suspension was then filtered to yield a lignin filter cake with 55 wt% dry substance content. The resulting lignin was removed from the filter and dried first in open air (in a fume hood) for 24 hours, and then further in a 60°C oven for 24 more hours. The resulting washed lignins were digested and analysed by ICP. Table 6 summarizes major trace element contents in original recovered lignins, and the recovered lignins contacted with the fluoride.

**Table 6. Major trace element contents in initial dry organosolv recovered lignins and in the same lignins after the fluoride contacting.**

| Organosolv recovered Lignin | | Trace element contents, ppm by weight | | | | | | | | |
|---|---|---|---|---|---|---|---|---|---|---|
| | | Al | Ca | Fe | Mg | P | K | Si | Na | V |
| Supplier 1 | Initial | 36 | 683 | 114 | 63 | 106 | 198 | 534 | 2352 | 1 |
| | Contacted with NH₄F | 17 | 6 | 20 | 2 | 58 | 6 | 65 | 4 | 1 |
| Supplier 2 | Initial | 28 | 472 | 141 | 14 | 102 | 116 | 842 | 8 | 1 |
| | Contacted with NH₄F | 18 | 7 | 23 | 2 | 83 | 7 | 113 | 4 | 1 |

### Example 7

In this example, the starting material was a derivatized lignin in the form of a lignin oil (Lignol^{™}) - a lignin esterified by reaction with fatty acids. The dry lignin content of the derivatized recovered lignin (Lignol^{™}) is about 37 % by weight, and the remainder is made up of hydrocarbon residues from the fatty acids. The lignin oil was diluted to 30 wt% with light gasoil prior to the experiment. A plastic container with magnetic stirrer was charged with 45 mL Lignol^{™}, to which 50 mL pH 1 water solution of sulfuric acid was added. To the diphase mixture, either 100 mg ammonium fluoride or 700 mg tetrabutylammonium fluoride was added. The container was closed, thoroughly shaken and warmed up to 50°C. The mixture was then incubated for 30 min under vigorous mixing and regularly manually shaken to ensure high contact area between the organic and the inorganic phases. At the end of the incubation period, the still warm mixture was poured into a plastic separation funnel, and 50 mL water was added on top. The mixture was gently stirred and left to separate. When the layers had separated, the water phase was removed from the bottom, and 100 mL water was added to the remaining Lignol^{™}. The funnel was then closed, thoroughly shaken over 5 min to ensure high area of contact between the phases, and left for 1 hour to allow the phases to separate. The water phase was removed from the bottom. The resulting lignin oil was digested and analysed by ICP, see Table 7 for comparison in silicon and metal content to the initial Lignol^{™}. The fluoride-treated lignin oil was an emulsion that contained 85% volatiles (water + gasoil); in comparison, the initial oil contained 65% volatiles in the form of gasoil as analysed by ICP. This dilution effect was taken into account and compensated for when presenting the results, so the element content in the washed Lignol^{™} in Table 7 is calculated per organic phase. Likewise, Table 8 presents the same trace element contents as calculated per weight of dry lignin in the mixture.

**Table 7. Major trace element contents in diluted derivatized lignin (Lignol^{™}) and in diluted Lignol^{™} contacted with two different fluoride sources.**

| Lignol^{™} (30 wt% derivatized lignin in light gasoil) | Trace element contents, ppm by weight | | | | | | | | |
|---|---|---|---|---|---|---|---|---|---|
| | Al | Ca | Fe | Mg | P | K | Si | Na | V |
| Initial | 2.6 | 10 | 3.6 | 2.6 | 1.5 | 0.1 | 30 | 3.4 | 1.2 |
| Contacted with NH₄F | 3.9 | 7.8 | 2.6 | 1.3 | 1.3 | 1.3 | 5.2 | 2.6 | 1.3 |
| Contacted with TBAF | 1.3 | 7.8 | 1.3 | 1.3 | 1.3 | 1.3 | 2.6 | 3.9 | 1.3 |

**Table 8. Major trace element contents calculated per weight dry lignin in diluted Lignol^{™} and in diluted Lignol^{™} contacted with two different fluoride sources.**

| Lignol^{™} (30 wt% derivatized lignin in light gasoil) | Trace element contents, ppm by weight of dry lignin | | | | | | | | |
|---|---|---|---|---|---|---|---|---|---|
| | Al | Ca | Fe | Mg | P | K | Si | Na | V |
| Initial | 23 | 90 | 32 | 23 | 14 | 1 | 270 | 31 | 11 |
| Contacted with NH₄F | 35 | 70 | 23 | 12 | 12 | 12 | 47 | 23 | 12 |
| Contacted with TBAF | 12 | 70 | 12 | 12 | 12 | 12 | 23 | 35 | 12 |

The initial content of Si of 30 ppm by weight in the diluted derivatized lignin corresponds to 100 ppm by weight in the non-diluted derivatized lignin, and 270 ppm Si by weight in the non-diluted derivatized lignin based on the dry lignin content of the non-diluted derivatized lignin.

The final Si content of 5.2 ppm in the treated diluted derivatized lignin corresponds to 17.3 ppm by weight of Si in treated non-diluted derivatized lignin based on the weight of the derivatized lignin, and 46.8 ppm in treated non-diluted derivatized lignin based on the dry lignin content of the derivatized lignin.

The final Si content of 2.6 ppm in the treated diluted derivatized lignin correspond to 8.7 ppm by weight of Si in treated non-diluted derivatized lignin based on the weight of the derivatized lignin, and 23.4 ppm in treated non-diluted derivatized lignin based on the dry lignin content of the derivatized lignin.

### Comparative Example 1

In order to corroborate the inventive effect of contacting lignin with a source of fluoride, for comparison, a batch of precipitated kraft lignin was acid-washed two times in a row according to the prior art. Three different sets of conditions were tested. In each set, the lignin was dispersed in a washing solution (5 parts per 1 part dry lignin) consisting of water, acetic acid, and sulfuric acid (see Table 9 for details). The slurry was then heated, incubated under mixing, and filtered (see Table 9 for details). The resulting filtered lignin was then subjected to the same wash conditions one more time, filtered, and dried. The final dry washed lignin was digested and the Si content was measured by ICP (see Table 9).

**Table 9. Trace silicon contents in initial precipitated kraft lignin (dried) versus the same lignin after washing two times in a row.**

| Comparative Example | Wash conditions (according to prior art) | | | | Si content, ppm |
|---|---|---|---|---|---|
| | % AcOH | % H₂SO₄ | temperature, °C | duration, min | |
| initial lignin | - | - | - | - | 242 |
| double-washed lignins | 18 | 1 | 40 | 150 | 240 |
| | 24 | 1 | 80 | 30 | 200 |
| | 18 | 0,51 | 60 | 90 | 194 |

It can be seen from Table 9 that two acidic washes in a row fail to significantly decrease the silicon content in lignin.

## Claims

1. Recovered lignin from lignocellulosic biomass, **characterized in that** the recovered lignin has a silicon content by weight, calculated as Si, of not more than 150 ppm by weight of the dry lignin weight of the recovered lignin.

2. The recovered lignin of claim 1, wherein the silicon content is not more than 100 ppm, more preferably not more than 80 ppm, more preferably not more than 50 ppm, more preferably not more than 30 ppm, more preferably not more than 20 ppm by weight of the dry lignin weight of the recovered lignin.

3. The recovered lignin according to claim 1 or 2, having a total combined content of sodium, potassium, calcium, magnesium, iron, aluminium, and vanadium, of not more than 300 ppm, preferably not more than 250 ppm, more preferably not more than 200 ppm of the dry lignin weight of the recovered lignin.

4. Derivatized recovered lignin exhibiting saturated and/or unsaturated hydrocarbon residues from fatty acids attached to the lignin, **characterized in** having a silicon content by weight, calculated as Si, of not more than 150 ppm by weight of the dry lignin content of the derivatized recovered lignin.

5. A method of providing a recovered lignin having a reduced content of silicon according to claim 1, comprising the steps of:
A providing a recovered lignin obtained from lignocellulosic biomass;
B contacting the recovered lignin with a source of fluoride for a predetermined period of time under conditions effective for the fluoride to react with silicon contained in the recovered lignin, thereby forming fluorosilicates;
C removing the fluorosilicates formed in step B, thereby obtaining a recovered lignin having a reduced silicon content.

6. The method of providing a recovered lignin having a reduced content of silicon of claim 5, wherein, in step A, the recovered lignin is provided in solid form.

7. The method of providing a recovered lignin having a reduced content of silicon of claim 5 or 6, wherein, in step B, the contacting is carried out in a liquid medium, preferably wherein the source of fluoride is soluble.

8. The method of providing a recovered lignin having a reduced content of silicon of any one of claims 5-7, wherein the recovered lignin is selected from the group consisting of kraft lignin, hydrolysis lignin, organosolv lignin, and acetosolv lignin, and is preferably kraft lignin, more preferably precipitated kraft lignin.

9. The method of providing a recovered lignin having a reduced content of silicon of claim 7 or 8, wherein, in step B, the liquid medium is aqueous, and the source of fluoride is water-soluble.

10. The method of claim 9, wherein the aqueous liquid medium has a pH of 7.5 or lower, preferably 6 or lower, preferably 5 or lower, more preferably 4 or lower, more preferably 3 or lower, more preferably 2 or lower, more preferably 1.5 or lower, more preferably 1 or lower.

11. The method according to claim 9 or 10, wherein the water-soluble source of fluoride is selected from the group consisting of ammonium fluoride, substituted ammonium fluoride, such as tetrabutylammonium fluoride, hydrogen fluoride, sodium fluoride, potassium fluoride, preferably from the group consisting of ammonium fluoride, and substituted ammonium fluoride, such as tetrabutylammonium fluoride.

12. The method of providing a recovered lignin having a reduced content of silicon of any one of claims 5-11, wherein, in step C, a rinsing liquid is used to remove the fluorosilicates, preferably an aqueous rinsing liquid.

13. The method according to claim 12, wherein the rinsing liquid is aqueous and has a pH of 6 or lower, preferably 5 or lower, more preferably 4 or lower.

14. The method according to claim 12 or 13, wherein the rinsing liquid comprises acetic acid, sulfuric acid, or a combination thereof.

15. The method according to any one of claims 5-14, wherein, in step B, the fluoride source is used in an amount corresponding to at least 6 molar equivalents of fluoride to 1 molar equivalent of silicon.

16. A method of providing a derivatised recovered lignin exhibiting saturated and/or unsaturated hydrocarbon residues from fatty acids attached to the lignin having a reduced content of silicon according to claim 4, comprising the steps of:
A' providing a derivatized recovered lignin obtained from lignocellulosic biomass exhibiting saturated and/or unsaturated hydrocarbon residues from fatty acids attached to the lignin;
B' contacting the derivatized recovered lignin with a source of fluoride for a predetermined period of time under conditions effective for the fluoride to react with silicon contained in the derivatized recovered lignin exhibiting saturated and/or unsaturated hydrocarbon residues from fatty acids attached to the lignin, thereby forming fluorosilicates;
C' removing the fluorosilicates formed in step B', thereby obtaining a derivatized recovered lignin exhibiting saturated and/or unsaturated hydrocarbon residues from fatty acids attached to the lignin having a reduced silicon content.
